# EUROPEAN PATENT APPLICATION

(11) **EP 4 834 067 A1**
(43) Date of publication of application: **04.11.2026**
(21) Application number: 24912215.1
(22) Date of filing: 02.12.2024
(51) Int. Cl.: A01B 69/00

(54) **REMOTE APPARATUS AND REMOTE OPERATION SYSTEM**

(30) Priority: 27.12.2023 JP 2023221132
(71) Applicant: KUBOTA CORPORATION, Osaka-shi, Osaka 530-0011 (JP)
(72) Inventor: HASEBE Daisuke, Sakai-shi, Osaka 590-0908 (JP)
(74) Representative: Cabinet Beau de Loménie
(86) International application number: PCT/JP2024/042561
(87) International publication number: WO 2025/142325

(57) **Abstract**

To support, by displaying an expected travel path, remote manipulation performed by a remote user.

A remote device (30) includes a first communicator (33) to communicate with a remote working machine (1), a remote manipulator (35) to receive an operation, and remotely manipulate the remote working machine (1) via the first communicator (33), and a display (34) to display a captured image (70a, 70b) of a surrounding area of the remote working machine (1) and a path object (90) indicating an expected travel path of the remote working machine (1) such that the path object (90) is superimposed on the captured image (70a, 70b). The display (34) is configured to switch between displaying and hiding the path object (90) in accordance with the operation received by the remote manipulator (35).

## Description

### Technical Field

The present invention relates to remote devices that remotely manipulate working machines, and remote manipulation systems.

### Background Art

A known remote control system generates a monitoring screen to monitor the driving state and working state of a working vehicle, and causes a display to display the monitoring screen (for example, PTL 1).

### Citation List

### Patent Literature

PTL 1: Japanese Unexamined Patent Application Publication No. 2021-36796

### Summary of Invention

### Technical Problem

In the remote manipulation system of PTL 1, when remote manipulation is performed, multiple screens showing the surrounding area (for example, the front, rear, right and left areas) of a working vehicle are displayed. However, a path (expected travel path) along which the working vehicle is expected to travel cannot be displayed in the remote manipulation system. Thus, the remote manipulation system of PTL 1 cannot support, by displaying an expected travel path, remote manipulation by a remote user.

The present invention has been made to solve such an issue in the related art, and it is an object of the present invention to provide a remote device and a remote manipulation system that can support, by displaying an expected travel path, remote manipulation performed by a remote user.

### Solution to Problem

A remote device according to an example embodiment of the present invention includes a first communicator to communicate with a remote working machine, a remote manipulator to receive an operation, and remotely manipulate the remote working machine via the first communicator, and a display to display a captured image of a surrounding area of the remote working machine and a path object indicating an expected travel path of the remote working machine such that the path object is superimposed on the captured image, wherein the display is configured to switch between displaying and hiding the path object in accordance with the operation received by the remote manipulator.

The path object may include a travel object indicating an expected movement path of a traveling device of the remote working machine and a work object indicating an expected movement path of a working device of the remote working machine. The display may be configured to switch between displaying and hiding the travel object and the work object in accordance with the operation received by the remote manipulator.

The travel object may include a first travel object indicating an expected movement path of at least one front wheel of the traveling device and a second travel object indicating an expected movement path of at least one rear wheel of the traveling device. The remote manipulator may be configured to be operated in a first manner to switch a direction of travel of the traveling device to a forward direction and to be operated in a second manner to switch the direction of travel of the traveling device to a rearward direction. The display may be configured to display the first travel object and a first captured image of an area forward of the remote working machine when the remote manipulator is operated in the first manner, and display the second travel object and a second captured image of an area rearward of the remote working machine when the remote manipulator is operated in the second manner.

The remote device may further include a switching operation actuator to receive an operation to perform switching in terms of displaying on the display. The display may be configured to, when the switching operation actuator is operated, switch between the first captured image and the second captured image in accordance with the operation of the switching operation actuator without relying on the operation of the remote manipulator in the first manner or the second manner.

The display may be configured to display the first or second travel object and the work object when the direction of travel of the traveling device caused by the operation in the first manner or the second manner matches the direction of the area of the first or second captured image, and hide the first or second travel object and the work object when the direction of travel of the traveling device caused by the operation in the first manner or the second manner does not match the direction of the area of the first or second captured image.

The display may be configured to display the first travel object and the work object and hide the second travel object when the remote manipulator is operated in the first manner and the first captured image is displayed, and display the second travel object and the work object and hide the first travel object when the remote manipulator is operated in the second manner and the second captured image is displayed.

The remote manipulator may be further configured to be operated in a third manner to switch the traveling device to neutral in addition to the first manner and the second manner. The display may be configured to, when the remote manipulator is operated in the third manner, hide the travel object and the work object.

A remote manipulation system according to an example embodiment of the present invention includes a remote device, and a remote working machine to be remotely manipulated by the remote device, wherein the remote working machine includes a second communicator to mutually communicate with the first communicator.

### Advantageous Effects of Invention

According to the present invention, it is possible to support, by displaying an expected travel path, remote manipulation performed by a remote user.

### Brief Description of Drawings

[FIG. 1] FIG. 1 is a configuration diagram of a remote manipulation system in an example embodiment of the present invention.
[FIG. 2] FIG. 2 is a side view of a tractor which is an example of a remote working machine.
[FIG. 3] FIG. 3 is a table illustrating an example of correspondence data.
[FIG. 4A] FIG. 4A is a view illustrating an example of a display screen when a remote manipulator is operated in a first manner.
[FIG. 4B] FIG. 4B is a view illustrating an example of a display screen when the remote manipulator is operated in a second manner.
[FIG. 4C] FIG. 4C is a view illustrating an example of a display screen when the remote manipulator is operated in a third manner.
[FIG. 5A] FIG. 5A is a view illustrating an example of a table.
[FIG. 5B] FIG. 5B is a view illustrating an example of a table in a variation.
[FIG. 6] FIG. 6 is a flowchart showing a display procedure for a display screen.
[FIG. 7] FIG. 7 is a view illustrating an example of a display screen in a variation.
[FIG. 8A] FIG. 8A is a view illustrating an example of a display screen when the remote manipulator is operated in the first manner in a variation.
[FIG. 8B] FIG. 8B is a view illustrating another example of a display screen when the remote manipulator is operated in the first manner in a variation.
[FIG. 8C] FIG. 8C is a view illustrating an example of a display screen when the remote manipulator is operated in the second manner in a variation.
[FIG. 8D] FIG. 8D is a view illustrating another example of a display screen when the remote manipulator is operated in the second manner in a variation.

### Description of Embodiments

Hereinafter, example embodiments of the present invention will be described with reference to the drawings.

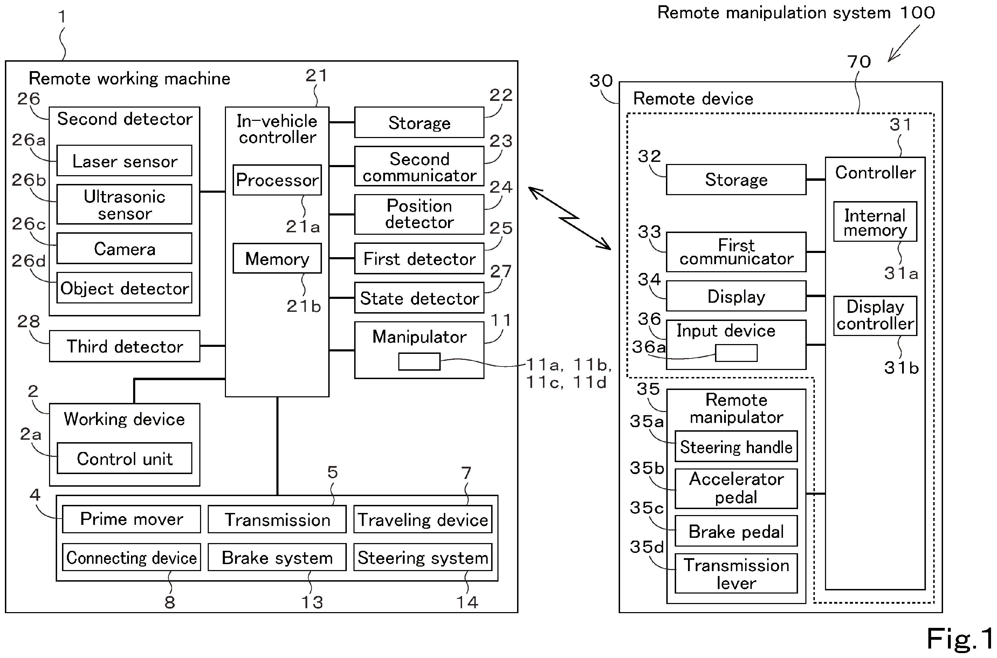

FIG. 1 is a configuration diagram of a remote manipulation system 100 in an example embodiment of the present invention. The remote manipulation system 100 includes a remote working machine 1 and a remote device 30. The remote manipulation system 100 and the remote device 30 enable remote manipulation (or remote operation) of the remote working machine 1 and remote monitoring of the remote working machine 1. The remote working machine 1 is an agricultural machine (also referred to as a "remote manipulation agricultural machine") that enables remote operation (for example, remote traveling and remote working) by the remote device 30. The remote working machine 1 includes an agricultural machine such as a tractor, a rice transplanter, and a combine to perform harvesting, on which the working device 2 such as an implement is mounted (supported). In the following, to simplify the explanation, the remote working machine 1 will be described using a tractor as an example, and a description of the agricultural machines other than the tractor will be omitted. In the following description, as the remote working machine 1, the tractor including an operator's seat 10 on which a user (operator) sits will be described as an example, however, the remote working machine 1 may be an agricultural machine dedicated for remote manipulation, not including an operator's seat 10 on which a user (operator) sits.

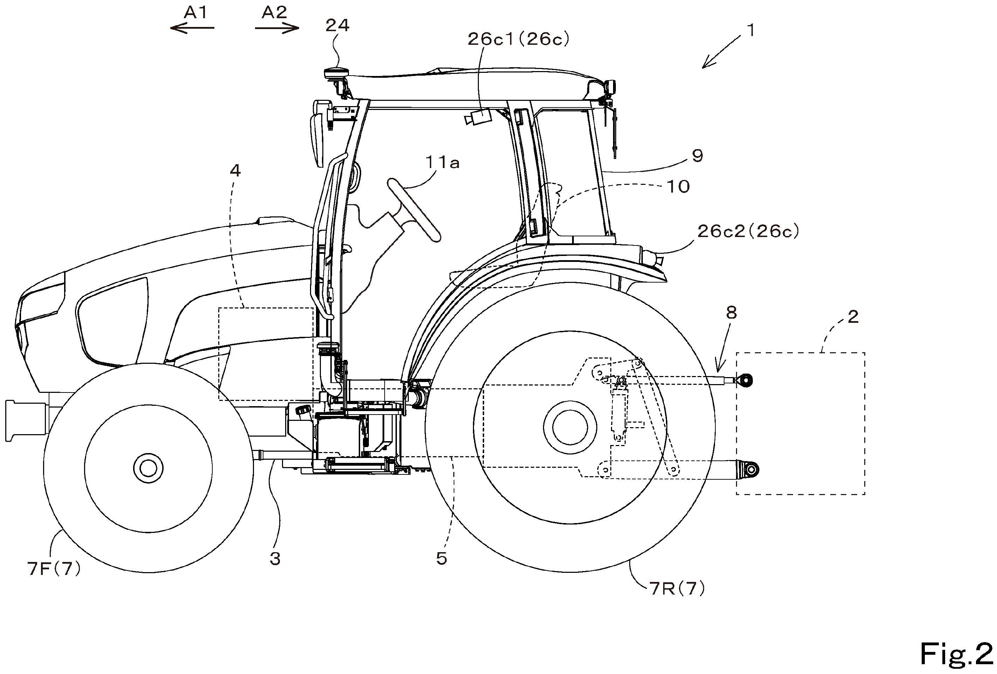

FIG. 2 is a side view of a tractor which is an example of the remote working machine 1. Hereinafter, a description will be given assuming that the front side (arrow A1 direction in FIG. 2) of a user sitting on the operator's seat 10 of the remote working machine 1 is forward, the rear side (arrow A2 direction in FIG. 2) of the user is rearward, the left side of the user is leftward (the near side in FIG. 2), and the right side of the user is rightward (the far side in FIG. 2). Also, a description will be given assuming that a lateral direction perpendicular to the front-rear direction of the remote working machine 1 is a width direction. The remote working machine 1 includes a machine body 3. The machine body 3 is provided with a traveling device 7. The traveling device 7 includes front wheels 7F and rear wheels 7R on both right and left sides of the machine body 3, respectively, to support and allow the machine body 3 to travel. The traveling device 7 may be a crawler device.

As illustrated in FIG. 1 and FIG. 2, the machine body 3 includes a prime mover 4, a transmission 5, a brake system 13, and a steering system 14. The prime mover 4 is an engine (a diesel engine, a gasoline engine) or an electric motor. The transmission 5 changes the propelling force of the traveling device 7, for example, by changing speed stages, and switches between forward travel and rearward travel of the traveling device 7. The transmission 5 includes multiple gears to transmit power, a shifter to change connection between the gears, and a clutch to switch between transmission and disconnection of power, then changes speed stages by these components. The transmission 5 can switch the traveling mode between a state (4WD constant speed state) in which four wheels are driven (4WD), that is, the front wheels 7F and the rear wheels 7R are driven by power and the rotational speeds of the front wheels 7F and the rear wheels 7R are approximately the same, a state (4WD speed-up state) in which four wheels are driven and the rotational speed of the front wheels 7F is faster than the rotational speed of the rear wheels 7R, and two-wheel drive (2WD) in which only rear wheels 7R are driven. Note that in the present example embodiment, the transmission 5 allows a main transmission unit (for example, continuously variable transmission), and an auxiliary transmission unit (for example, stepped transmission) to change speed stages independently.

The brake system 13 controls the movement of the machine body 3. The steering system 14 operates the machine body 3 such that it is oriented in a predetermined direction.

A manipulator 11 to manually operate the remote working machine 1 is provided around the operator's seat 10. The remote working machine 1 allows unmanned travel and work. However, a user sitting on the operator's seat 10 can also cause the remote working machine 1 to travel and cause the working device 2 to perform work by operating the manipulator 11. The manipulator 11 includes a steering wheel 11a, an accelerator pedal 11b, a brake pedal 11c, and a transmission lever 11d.

A connecting device 8 is provided at a rear portion of the machine body 3. The connecting device 8 includes a three-point linkage or the like. The connecting device 8 can detachably connect the working device 2 to the machine body 3. The remote working machine 1 (the machine body 3) can tow the working device 2 by connecting the working device 2 to the connecting device 8, and causing the traveling device 7 to travel. The connecting device 8 can raise and lower the working device 2 and change the position thereof by driving an actuator (for example, a hydraulic cylinder).

The working device 2 includes, for example, a cultivator to cultivate soil, a fertilizer spreader to spread fertilizer, an agricultural chemical spreader to spread agricultural chemicals, a harvester to perform harvesting, a mower to mow grass and the like, a tedder to spread grass and the like, a rake to collect grass and the like, and a baler to bundle grass and the like. The remote working machine 1 performs agricultural work on an agricultural field by these working devices 2.

As illustrated in FIG. 1, the remote working machine 1 includes an in-vehicle controller 21, a storage (memory and/or storage) 22, a second communicator (in-vehicle communicator) 23, a position detector 24, a first detector (inertial measurement unit) 25, a second detector (sensing device) 26, a state detector 27, and a third detector 28. In the remote working machine 1, an in-vehicle network such as CAN, LIN, or FlexRay is constructed, and the in-vehicle controller 21 is electrically connected to the storage 22, the second communicator 23, the position detector 24 and the like.

The in-vehicle controller 21 is an electronic control unit (ECU) including a processor 21a and a memory 21b. The in-vehicle controller 21 is a controller to control the operation of the components of the remote working machine 1. The memory 21b includes a volatile or non-volatile memory or the like. The in-vehicle controller 21 controls an actuator group including electric or hydraulic motors, cylinders, and control valves to actuate the components of the remote working machine 1, such as the prime mover 4, the transmission 5, the traveling device 7, the brake system 13, and the connecting device 8. The memory 21b of the in-vehicle controller 21 stores, in a readable and writable manner, various information and data for the in-vehicle controller 21 to control the operation of the components of the remote working machine 1. The storage 22 is, for example, a solid state drive (SSD), a hard disk drive (HDD) and the like.

The second communicator 23 includes an antenna, an integrated circuit (IC), and an electric circuit to perform wireless communication via a mobile-phone communication network, the Internet or a wireless LAN. The in-vehicle controller 21 wirelessly communicates with the remote device 30 by the second communicator 23. In addition, the in-vehicle controller 21 includes a real-time clock (RTC), and keeps track of the date and time.

Note that in the present example embodiment, an example is illustrated in which the remote working machine 1 and the remote device 30 communicate via a mobile-phone communication network or the like; however, alternatively, for example, the remote working machine 1 and the remote device 30 may communicate with a mobile-phone communication network via an external device such as a server or a repeater. The remote working machine 1 and the remote device 30 may directly communicate via a short-range wireless signal such as BLU (Bluetooth (registered trademark) low energy) signal or an ultra-high frequency (UHF) signal. In this case, it is only necessary to use a configuration in which the second communicator 23 and the remote device 30 are provided with respective interfaces for short-range wireless communication.

The position detector 24 detects the position of itself (measured position information including the latitude and longitude) by utilizing a satellite positioning system. Specifically, the position detector 24 receives signals (positions of positioning satellites, time of sending, correction information and the like) transmitted from the positioning satellites, and detects the position of itself based on the signals. The position detector 24 may detect, as the position of itself, a position corrected based on signals for correction and the like from base stations (reference stations) which can receive the signals from the positioning satellites. The position detector 24 may calculate the position of the remote working machine 1 based on the detected position of itself, and pre-stored external shape information of the remote working machine 1. The position detector 24 may calculate the position of the working device 2 based on the detected position of itself, pre-stored external shape information of the working device 2, and the mounting position of the working device 2 on the machine body 3.

The first detector 25 includes a gyroscope sensor or an acceleration sensor or the like, and detects the roll angle, the pitch angle, the yaw angle and the like of the remote working machine 1 (the machine body 3). In other words, the first detector 25 detects the posture of the remote working machine 1, inclined to the right or left and the front or rear with respect to a horizontal state.

The second detector 26 is a sensing device to sense (monitor) the surrounding area of the remote working machine 1. Specifically, the second detector 26 includes a laser sensor 26a, an ultrasonic sensor 26b, a camera 26c, and an object detector 26d. In the present example embodiment, the second detector 26 includes multiple laser sensors 26a and multiple ultrasonic sensors 26b. The laser sensors 26a and the ultrasonic sensors 26b are installed at predetermined positions such as a front portion, a rear portion, and right and left lateral portions of the remote working machine 1 to detect the situation of surrounding areas such as an area forward of, an area rearward of, and/or areas on the right and left sides of the remote working machine 1 and an object in the surrounding areas. For example, the laser sensor 26a and the ultrasonic sensor 26b are each installed at a predetermined position of the machine body 3, at which an object within a predetermined target detection distance from the remote working machine 1 and even lower than the machine body 3 is detectable.

The laser sensor 26a and the ultrasonic sensor 26b are an example of an object sensor. Note that the second detector 26 may be provided with multiple pieces of at least one of the laser sensor 26a or the ultrasonic sensor 26b as an object sensor. Alternatively, the second detector 26 may be provided with multiple pieces of another object sensor.

The laser sensor 26a may be an optical sensor such as a light detection and ranging (LiDAR) sensor. The laser sensor 26a emits millions of pulsed measurement light (laser light) per second from a light source such as a laser diode, and reflects the measurement light on a rotating mirror to scan in a horizontal direction or a vertical direction, thus projects the measurement light into a predetermined detection range (sensing range). The laser sensor 26a then receives, by a light receiving element, reflection light of the measurement light reflected by an object.

The object detector 26d includes an electric circuit or an IC that detects the presence or absence of an object, the position of an object, and the type of an object based on received light signal output from the light receiving element of the laser sensor 26a. The object detector 26d detects the distance to an object based on the time since emission of measurement light by the laser sensor 26a until the measurement light is received (Time of Flight (TOF) method). The object detected by the object detector 26d includes the agricultural field on which the remote working machine 1 travels and performs work, the crops in the agricultural field, the ground surface, the inclination of the ground surface, other objects, and humans.

The ultrasonic sensor 26b is an air-coupled ultrasonic sensor such as a sonar. The ultrasonic sensor 26b transmits measurement waves (ultrasonic waves) to a predetermined detection range by a transmitter, and receives, by a receiver, reflection waves of the measurement waves reflected by an object. The object detector 26d detects the presence or absence of an object, the position of an object, and the type of an object based on the signal output from the receiver of the ultrasonic sensor 26b. The object detector 26d detects the distance to an object based on the time since transmission of measurement waves by the ultrasonic sensor 26b until reflection waves are received (TOF method).

The camera 26c includes a CCD camera on which a charge coupled device (CCD) image sensor is mounted, or a CMOS camera on which a complementary metal oxide semiconductor (CMOS) image sensor is mounted. As illustrated in FIG. 2, the camera 26c is installed at each of predetermined positions such as a front portion, a rear portion, right and left portions of the remote working machine 1, and the inside of a cabin 9 to capture image(s) of surrounding areas such as an area forward of, an area rearward of, and/or areas on the right and left sides of the remote working machine 1, and output data of the captured image. The camera 26c is an example of an imaging device.

For example, as illustrated in FIG. 2, a camera 26c1 installed inside the cabin 9 captures an image of an area forward of the remote working machine 1 from the operator's seat 10. More specifically, the camera 26c1 captures an image of an area forward (in the direction of travel, A1 direction) of the remote working machine 1 in approximately the same field of view as that of a user sitting on the operator's seat 10. That is, with the camera 26c1, a captured image of an area in the direction of travel of the remote working machine 1 is obtained.

As illustrated in FIG. 2, a camera 26c2 installed at a rear portion of the machine body 3 of the remote working machine 1 captures an image of an area rearward of the remote working machine 1. More specifically, the camera 26c2 captures an image of an area in the opposite direction (direction of the arrow A2) of the field of view of a user sitting on the operator's seat 10. In other words, with the camera 26c2, an image capturing the area in the direction opposite to the direction of travel of the remote working machine 1 is obtained.

The object detector 26d can also detect the presence or absence of an object, the position of an object, and the type of an object based on the data of the captured image output from the camera 26c.

The second detector 26 senses (monitors) the situation of the surrounding area of the remote working machine 1 and the working device 2 by the laser sensor 26a, the ultrasonic sensor 26b, the camera 26c, and the object detector 26d, and outputs sensing information indicating the results to the in-vehicle controller 21. The sensing information includes at least the information detected by the object detector 26d, the data of the image captured by the camera 26c, and the inclination in the surrounding area. However, the sensing information may include the information detected by the laser sensor 26a and the ultrasonic sensor 26b other than those.

The state detector 27 detects the operating state of the remote working machine 1. Specifically, the state detector 27 includes various sensors installed at corresponding positions of the remote working machine 1 (the machine body 3) and a computing unit so that the computing unit detects (calculates) the operating state of the remote working machine 1 based on the output signals from the various sensors. The operating state of the remote working machine 1 detected by the state detector 27 includes the state of drive and stop of each component of the remote working machine 1, and the direction of travel, the traveling speed, the acceleration, and the steering angle of the remote working machine 1.

The state detector 27 acquires the position (position of the remote working machine 1) of the machine body 3, detected by the position detector 24 at a predetermined cycle, and may detect (calculate) the position of the working device 2 from the position of the machine body 3, and detect the change (transition) in the position of the machine body 3. Alternatively, the state detector 27 may detect the traveling speed of the machine body 3 from the change in the position of the machine body 3. As another example, a rotation speed sensor is provided which detects the number of revolutions (rotation speed) of the front wheels 7F, and the rear wheels 7R of the traveling device 7, or the number of revolutions of a traveling motor to rotate the front wheels 7F, and the rear wheels 7R, and the state detector 27 may detect the traveling speed of the machine body 3 based on the output signal from the rotation speed sensor. The steering system 14 is provided with a sensor, and the state detector 27 may detect the steering angle of the machine body 3 based on the output signal from the sensor.

The state detector 27 generates detection information indicating the detected operating state of the remote working machine 1, and outputs the detection information to the in-vehicle controller 21. For example, the detection information of the state detector 27 includes manipulation information of the remote working machine 1 and the working device 2. For example, the manipulation information includes at least one of the speed (or acceleration) of the remote working machine 1, the transmission switch position of the transmission 5, the braking position of the brake system 13, the operation position of the working device 2, or the steering angle of the machine body 3.

The third detector 28 detects the state of the working device 2. The third detector 28 includes various sensors installed at corresponding positions of the connecting device 8 and the working device 2, and a computing unit so that the computing unit detects (calculates) the operating state of the working device 2 based on the output signals from the various sensors. The state of the working device 2 detected by the third detector 28 includes the type of the working device 2, the state of attachment/detachment of the working device 2, the state of drive and stop of each component of the working device 2, and the inclination, and height of the working device 2 from the ground.

Note that when the type of the remote working machine 1 is a rice transplanter, the third detector 28 may detect the state of drive and stop of each structure related to seedling planting, the remaining amount of materials (seedling, fertilizer) and the like based on the output signals from various sensors installed at corresponding positions of a seedling planting device or the like. When the type of the remote working machine 1 is a combine, the third detector 38 may detect the state of drive and stop of each structure related to harvesting, characteristics of harvested grains and the like based on the output signals from various sensors installed at corresponding positions of a mower, a grain tank and the like.

The position detector 24, the first detector 25, the state detector 27, and the third detector 28 output, to the in-vehicle controller 21 as needed, detection information indicating the results detected at a predetermined cycle or a predetermined timing. The second detector 26 also outputs, to the in-vehicle controller 21 as needed, sensing information indicating the results sensed at a predetermined cycle or a predetermined timing. The in-vehicle controller 21 stores, in the internal memory 21b, the detection information and the sensing information which have been input from the position detector 24, the state detector 27, and the second detector 26.

In a case of remote operation, the in-vehicle controller 21 sequentially transmits the detection information from the position detector 24, the first detector 25, the state detector 27, and the third detector 28A, and the sensing information from the second detector 26 which have been stored in the internal memory 21b to the remote device 30 at a predetermined cycle or a predetermined timing by the second communicator 23.

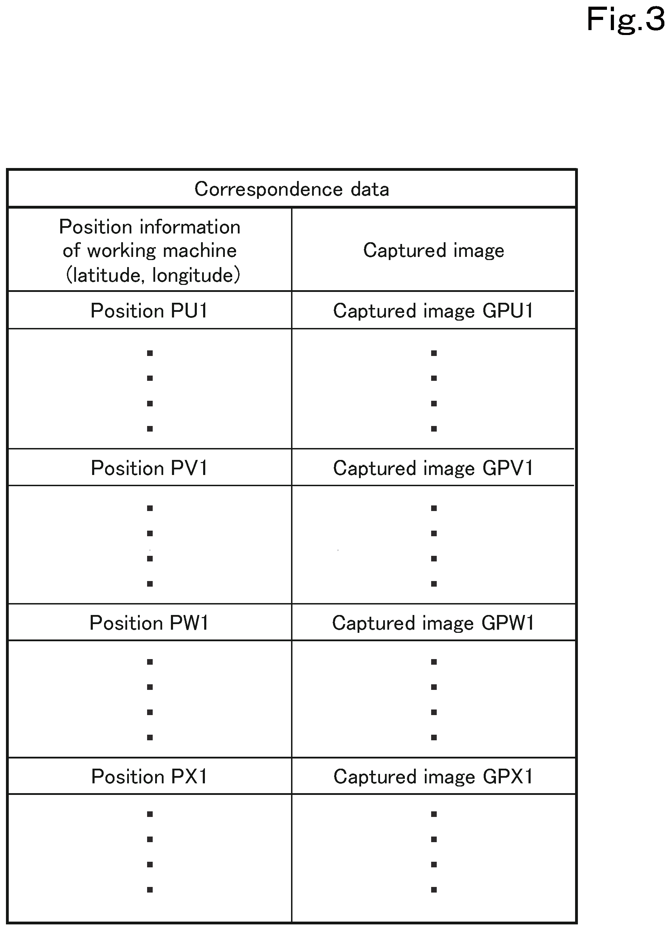

In this manner, the detection information and the sensing information transmitted from the remote working machine 1 include correspondence data (see FIG. 3) that associates the position information of the remote working machine 1 with a captured image of an area in the direction of travel of the remote working machine 1. FIG. 3 is a view illustrating an example of correspondence data. In other words, the correspondence data associating the detection information (namely, the position information of the remote working machine 1) from the position detector 24 with the sensing information (for example, the image captured by the camera 26c1) from the second detector 26 is sequentially transmitted to the remote device 30. Referring to captured images, as illustrated in FIG. 3, correspondence data is sequentially transmitted to the remote device 30, the correspondence data associating the position information (for example, positions PU1, PV1, PW1, PX1) of the remote working machine 1 detected by the position detector 24 with the images (for example, captured images GPU1, GPV1, GPW1, GPX1) captured by the camera 26c1.

The in-vehicle controller 21 communicates with a control unit 2a included in the working device 2 to cause the control unit 2a to control the operation of the working device 2. In other words, the in-vehicle controller 21 performs work on an agricultural field by controlling the operation of the working device 2 via the control unit 2a. For example, the control unit 2a includes a CPU, a memory and the like. Note that some working devices 2 may not include the control unit 2a. In this case, the in-vehicle controller 21 controls the position of the working device 2 by the connecting device 8, and performs work on an agricultural field by the working device 2.

The in-vehicle controller 21 controls the travel of the remote working machine 1, the work performed by the working device 2, and other operations of the remote working machine 1 based on the detection information acquired from the first detector 25, the second detector 26, the state detector 27, the third detector 28A and the like. When receiving a remote manipulation signal transmitted from the remote device 30 by the second communicator 23, the in-vehicle controller 21 controls the travel of the remote working machine 1, the work performed by the working device 2, and other operations of the remote working machine 1 based on the remote manipulation signal in addition to the above-mentioned information.

In addition, when controlling the travel of the remote working machine 1 or the work performed by the working device 2, the in-vehicle controller 21 determines based on the detection information from the object detector 26d whether an object approaches within a predetermined distance from the remote working machine 1 or the working device 2, and there is a risk of contact. When determining that an object approaches within a predetermined distance from the remote working machine 1 or the working device 2, and there is a risk of contact, the in-vehicle controller 21 controls the traveling device 7 or the working device 2 to automatically stop the travel or the work of the remote working machine 1, and avoids the contact with the object.

Next, the remote device 30 will be described. As illustrated in FIG. 1, the remote device 30 is located at a position away from the remote working machine 1. With the remote device 30, the remote working machine 1 can be remotely manipulated by a human remote manipulator (remote user, human operator)'s manipulation, and the state of the remote working machine 1, the situation of a surrounding area of the remote working machine 1 and the like can be monitored. The remote device 30 includes a controller 31, a storage (memory and/or storage) 32, the first communicator 33, a display 34, a remote manipulator 35, and an input device 36.

The controller 31 is a processor to control the operation of the components of the remote device 30. The processor functions as the controller 31 which controls the operation of the components of the remote device 30, for example, by executing a remote control program, an application or the like stored in the storage 32. The controller 31 may be implemented by hardware in an integrated circuit (IC chip), or may be implemented by software using a computer. In the latter case, the computer includes: a recording medium in which a program as software implementing the functions of the controller 31 and various data relating to the remote working machine 1 are recorded in a computer-readable manner; an arithmetic circuit such as a central processing unit (CPU) that executes the commands in the program; and a random access memory (RAM) for loading the program and various data, etc. The functions of the controller 31 are implemented by the arithmetic circuit reading the program from the recording medium and executing the program.

An internal memory 31a provided in the controller 31 is a volatile or non-volatile memory. The internal memory 31a stores, in a readable and writable manner, various information and data for controlling the operation of the components of the remote device 30 by the controller 31.

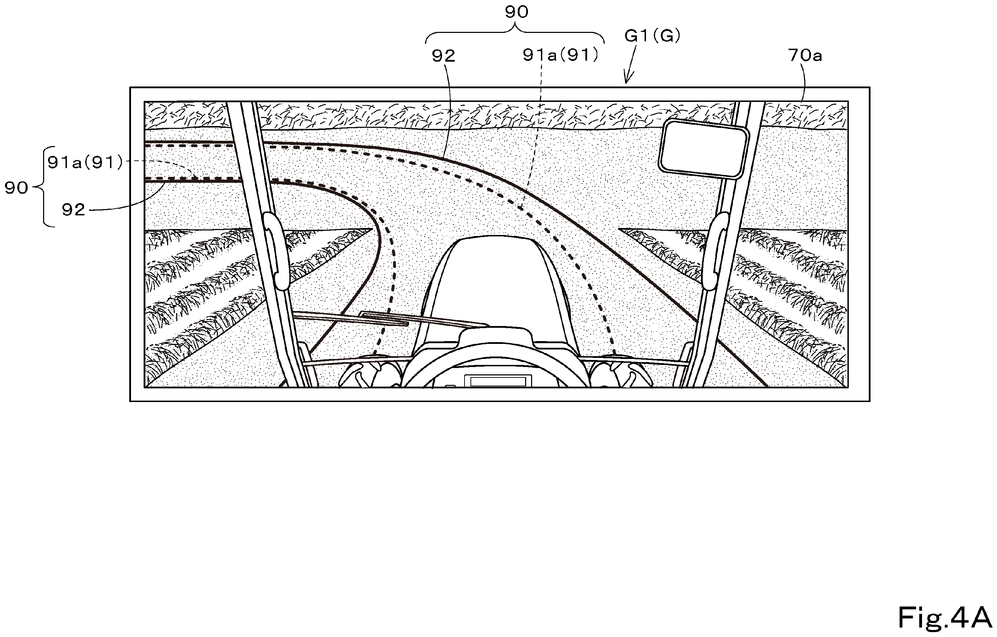

The controller 31 includes a display controller 31b. The processor functions as the display controller 31b, for example, by executing a display control program stored in the storage 32 or the internal memory 31a. The display controller 31b may be hardware included in an integrated circuit (IC chip). The display controller 31b has a function of controlling a display screen G to be displayed by the display 34. For example, the display controller 31b displays, on the display 34, the display screen G (see the below-mentioned FIG. 4A) showing information related to the remote operation.

The storage 32 pre-stores an application such as a remote control program for remotely operating the remote working machine 1, a remote monitoring program for remotely monitoring the remote working machine 1, and various data. The storage 32 is, for example, a solid state drive (SSD), a hard disk drive (HDD) and the like.

The first communicator 33 includes an antenna, an IC, and an electric circuit to perform wireless communication via a mobile-phone communication network, the Internet or a wireless LAN. The first communicator 33 can wirelessly communicate with the remote working machine 1 under the control of the controller 31. The first communicator 33 receives various data (such as the detection information from the position detector 24, the first detector 25, the state detector 27, and the third detector 28, and the sensing information from the second detector 26) transmitted from the second communicator 23. For example, the first communicator 33 receives correspondence data that associates the position information of the remote working machine 1 with a captured image of an area in the direction of travel of the remote working machine 1.

The display 34 is, for example, a liquid crystal display, an organic EL display or the like. The display 34 displays various information for remotely operating the remote working machine 1. For example, the display 34 displays the display screen G showing information relating to remote operation, based on instruction signals from the display controller 31b. The details of the display screen G will be described below.

The input device 36 is an interface for operating the remote device 30. A human remote manipulator (remote user) can input a predetermined instruction to the remote device 30 by operating the input device 36. The input device 36 includes a switching operation actuator 36a that, for example, upon receiving an operation to perform switching in terms of displaying of the display 34, outputs a switching instruction. Note that as the input device 36, a touch panel provided in the display 34 may be used to allow a touch operation for the display 34 to be detected, or a hardware switch may be used.

The remote manipulator 35 is a device to remotely manipulate (remotely operate, remotely control) the remote working machine 1. The remote manipulator 35 includes a steering handle 35a, an accelerator pedal 35b, a brake pedal 35c and a transmission lever 35d, and these are located around a remote user's seat. The remote manipulator 35 receives an operation of a remote user. A remote user sits on the remote user's seat to operate the remote manipulator 35, thus remotely operates the travel of the remote working machine 1 or the work performed by the working device 2. A remote user monitors the remote working machine 1 and the situation of surrounding area by the display 34. The remote user can input predetermined information or instruction to the remote device 30 by operating the remote manipulator 35. Note that the remote manipulator 35 may be a touchpad or a hardware switch or the like.

As illustrated in FIG. 1, the remote device 30 may include a display terminal 70 and the remote manipulator 35. That is, the display terminal 70 may be a terminal device including the controller 31, the storage 32, the first communicator 33, the display 34, and the input device 36. As the display terminal 70, for example, a tablet device or a portable terminal device such as a smartphone, and a desktop computer installed in a base station may be mentioned.

When a remote user inputs an operation instruction to the remote working machine 1 by operating the remote manipulator 35, the controller 31 generates a remote manipulation signal corresponding to the operation instruction, and transmits the remote manipulation signal to the remote working machine 1 by the first communicator 33. In other words, a remote manipulation signal according to an operation of the steering handle 35a, the accelerator pedal 35b, the brake pedal 35c and the transmission lever 35d is transmitted to the remote working machine 1. When receiving a remote manipulation signal from the remote device 30 by the second communicator 23, the in-vehicle controller 21 of the remote working machine 1 controls the travel and steering of the remote working machine 1, and controls the working operation of the working device 2 by operating the components of the remote working machine 1 based on the remote manipulation signal, the detection information from the position detector 24, the sensing information from the second detector 26, and the detection information from the state detector 27.

The in-vehicle controller 21 periodically transmits the detection information from the position detector 24, the first detector 25, the state detector 27, and the third detector 28, and the sensing information from the second detector 26 to the remote device 30 by the second communicator 23. When receiving the detection information and the sensing information by the first communicator 33, the controller 31 of the remote device 30 stores the information in the internal memory 31a and/or displays the information on the display 34.

The controller 31 can cause the display screen G showing information relating to remote operation to be displayed on the display 34. The display 34 displays the display screen G based on the instruction signal from the controller 31 (the display controller 31b). Specifically, the display controller 31b converts the information relating to remote operation into a data format (image) displayable on the display 34. The display controller 31b inputs, to the display 34, the converted image and the display position of the image on the display 34 as an instruction signal, and displays the display screen G.

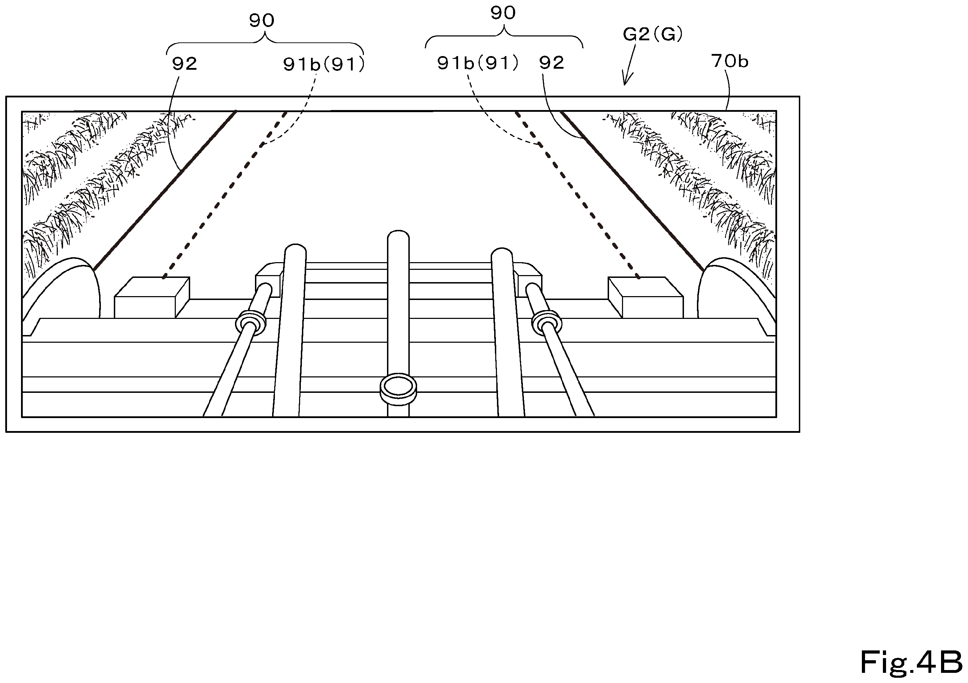

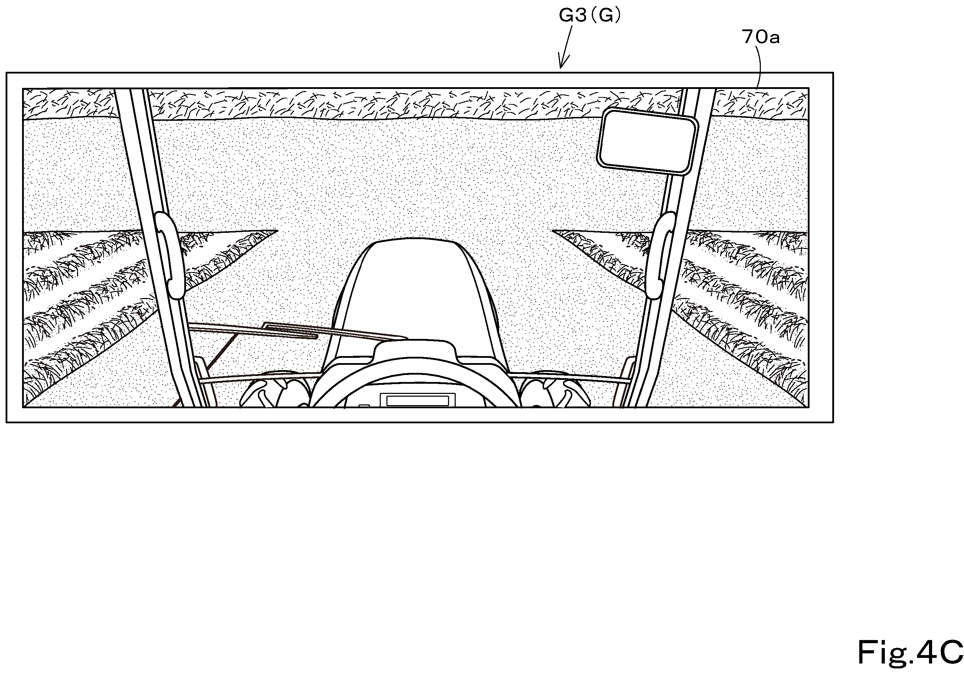

FIG. 4A to FIG. 4C are views each illustrating an example of the display screen G. As illustrated on the display screens G1 and G3 of FIG. 4A and FIG. 4C, the display controller 31b causes a first captured image 70a to be displayed on the display 34. The first captured image 70a shows an area forward of the remote working machine 1 in a driver's perspective, and is obtained by the camera 26c1 (FIG. 2) installed in the cabin 9 among multiple cameras 26c provided in the remote working machine 1. As illustrated in FIG. 4B, the display controller 31b causes a second captured image 70b to be displayed on a display screen G2 of the display 34. The captured image 70b shows an area rearward of the remote working machine 1 and is obtained by the camera 26c2 (FIG. 2) installed at a rear portion of the machine body 3. In the following description, the first captured image 70a and the second captured image 70b may be collectively referred to as the captured images 70a and 70b.

The display 34 displays the captured image(s) 70a, 70b of a surrounding area of the remote working machine 1 and a path object 90 indicating an expected travel path of the remote working machine 1 based on the control (for example, a display control signal) by the display controller 31b such that the path object 90 is superimposed on the captured image(s) 70a, 70b. The path object 90 includes a travel object 91 indicating an expected movement path of the traveling device 7 of the remote working machine 1, and a work object 92 indicating an expected movement path of the working device 2 of the remote working machine 1. The travel object 91 includes a first travel object 91a indicating an expected movement path of the front wheel(s) 7F of the traveling device 7, and a second travel object 91b indicating an expected movement path of the rear wheel(s) 7R of the traveling device 7.

The first travel object 91a is an image object (image data) indicating a path of movement (passage) of the front wheels 7F of the traveling device 7 when they continue to travel with the current steering angle of the machine body 3, in short, an expected path of the front wheels 7F of the traveling device 7. The second travel object 91b is an image object (image data) indicating a path of movement (passage) of the rear wheels 7R of the traveling device 7 when they continue to travel with the current steering angle of the machine body 3, in short, an expected path of the rear wheels 7R of the traveling device 7. The work object 92 is an image object (image data) indicating a path of movement (passage) of both ends of the working device 2 with a maximum width when both ends continue to travel with the current steering angle of the machine body 3, in short, an expected path of the maximum width of the working device 2.

The controller 31 obtains the steering angle (detection information) of the machine body 3 and dimensional information of the traveling device 7 and the working device 2 of the remote working machine 1 from the remote working machine 1 via the first communicator 33. Note that the dimensional information of the traveling device 7 and the working device 2 may be pre-stored in the storage 32 of the remote device 30.

The controller 31 defines (calculates) the expected movement path of the front wheels 7F, the rear wheels 7R and both ends of the working device 2 based on the current steering angle of the machine body 3 and the dimensional information of the traveling device 7 and the working device 2. The display controller 31b converts the result of calculation of the expected movement path into a data format (object) displayable on the display 34, and displays, as the path object 90, the result in the data format superimposed on the captured images 70a and 70b. As illustrated in FIG. 4A and FIG. 4B, the first travel object 91a, the second travel object 91b, and the work object 92 are superimposed and displayed on the captured images 70a and 70b. For example, the display controller 31b identifies, as the base position, the positions of the front wheels 7F, the rear wheels 7R and both ends of the working device 2 with a maximum width on the display screen G by image recognition, and generates the path object 90 obtained by converting the result of calculation of the expected movement path into an image object extending from the base position on the display screen G, and displays the path object 90 superimposed on the captured images 70a and 70b.

The remote manipulator 35 (the transmission lever 35d) is to be operated in a first manner to switch the direction of travel of the traveling device 7 to a forward direction (the arrow A1 direction of FIG. 2), to be operated in a second manner to switch the direction of travel of the traveling device 7 to a rearward direction (the arrow A2 direction of FIG. 2), and to be operated in a third manner to switch the traveling device 7 to neutral in addition to the first manner and the second manner.

The display 34 switches between displaying and hiding the path object 90 (the travel object 91 and the work object 92) in accordance with the operation received by the remote manipulator 35. The display 34 switches between displaying and hiding the path object 90 in accordance with the operation of switching the direction of travel of the traveling device 7 received by the remote manipulator 35. Specifically, when the remote manipulator 35 is operated in the first manner, the display 34 displays the first captured image 70a and the first travel object 91a, and when the remote manipulator 35 is operated in the second manner, the display 34 displays the second captured image 70b and the second travel object 91b. When the remote manipulator 35 is operated in the third manner, the display 34 hides the travel object 91 and the work object 92.

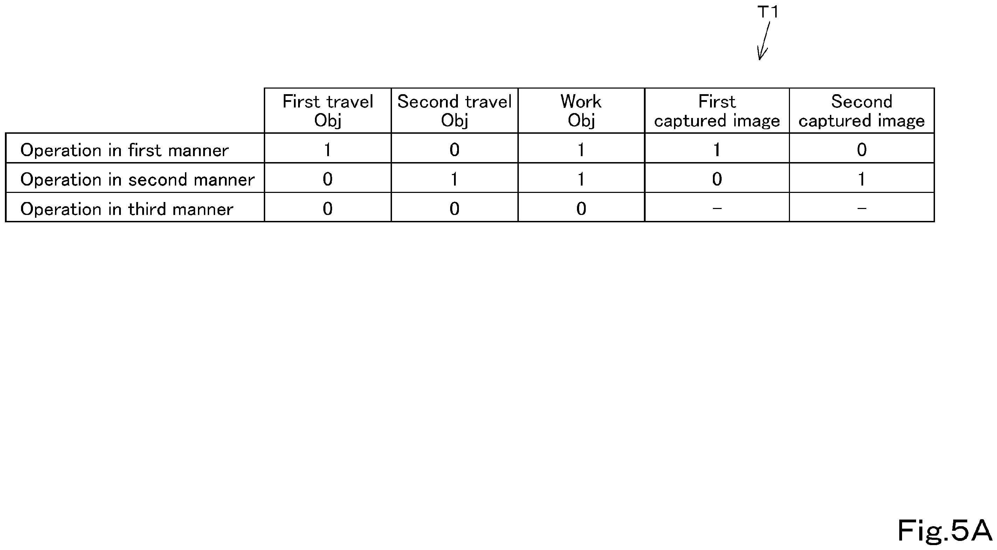

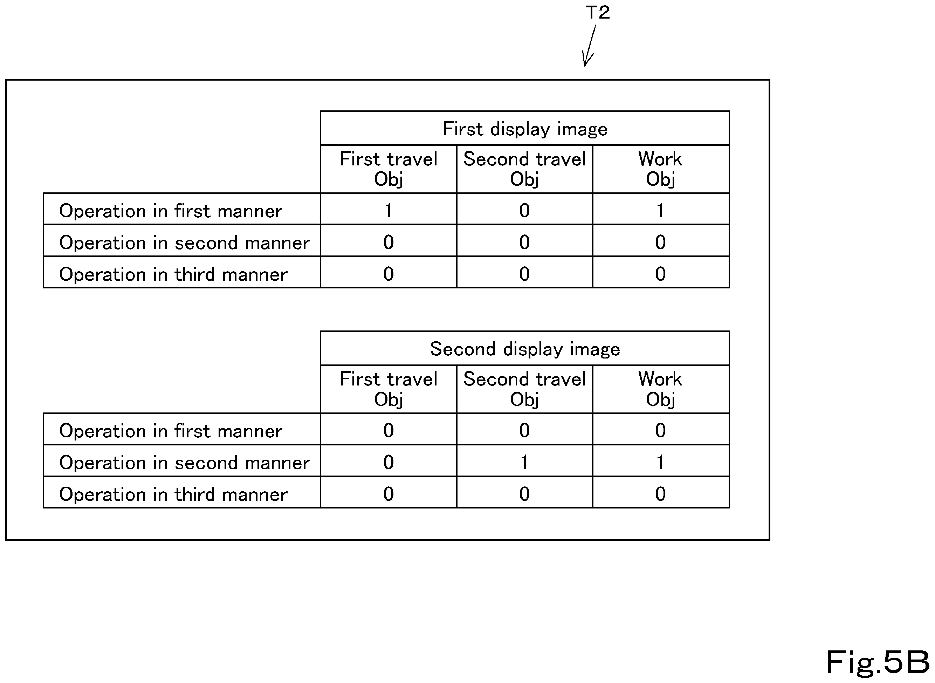

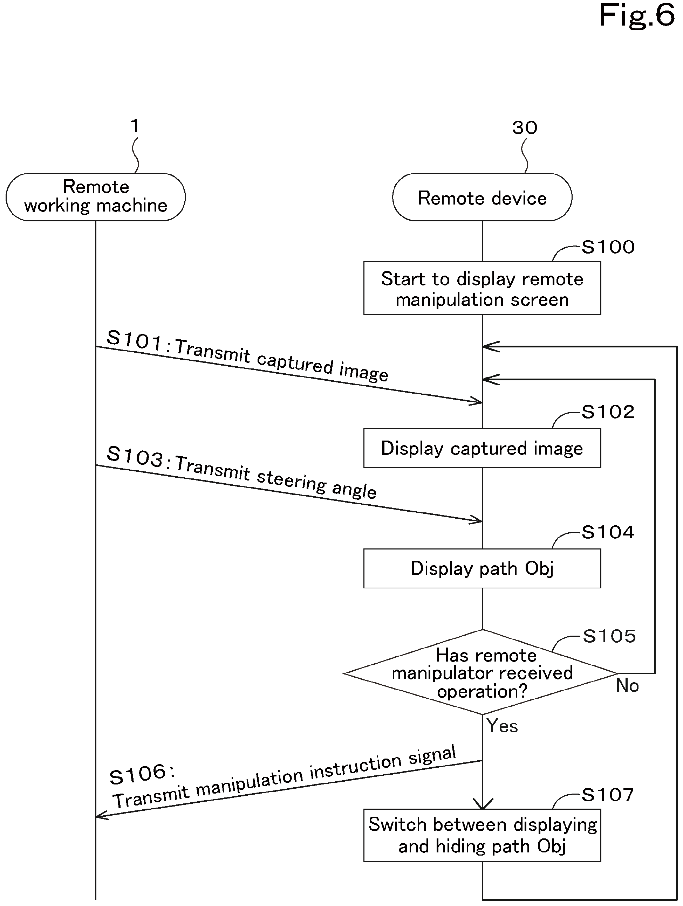

The storage 32 pre-stores a table T1 that associates each operation to be received by the remote manipulator 35 with an object to be displayed on the display 34. FIG. 5A is a view illustrating an example of the table T1. In FIG. 5A, for the sake of convenience, an object is denoted as "Obj". This also applies to the below-mentioned FIG. 5B and FIG. 6. In the table T1, "0" indicates hiding, and "1" indicates displaying. This also applies to the below-mentioned FIG. 5B. In the table T1, "-" indicates that the state of displaying or hiding is not changed (the state before operation is maintained).

When the remote manipulator 35 (the transmission lever 35d) receives an operation in one of the first manner, the second manner, or the third manner, the controller 31 transmits a corresponding remote manipulation instruction signal to the remote working machine 1, the display controller 31b refers to the table T1, and controls switching between displaying and hiding the path object 90 and the captured images 70a and 70b.

FIG. 6 is a flowchart showing a display procedure for the display screen G. The steps of the flowchart shown on the left side of FIG. 6 are performed by the in-vehicle controller 21 based on a software program stored in the storage 22. The steps of the flowchart shown on the right side of FIG. 6 are performed by the controller 31 of the remote device 30 based on a software program stored in the storage 32.

When the remote device 30 is started, and receives, by the input device 36, an instruction input to perform remote manipulation on the remote working machine 1, the controller 31 starts control of remote manipulation on the remote working machine 1. As illustrated in FIG. 6, when the controller 31 of the remote device 30 starts control of remote manipulation on the remote working machine 1, the display controller 31b of the remote device 30 starts a process of causing the display screen G to be displayed on the display 34 (S100).

The in-vehicle controller 21 of the remote working machine 1 transmits, from the remote working machine 1 to the remote device 30 by the second communicator 23, the captured images 70a and 70b obtained by the camera 26c (S101).

When the first communicator 33 of the remote device 30 receives the captured images 70a and 70b, the display controller 31b causes the first captured image 70a and the second captured image 70b to be displayed on the display screen G of the display 34 based on the definition of the table T1 (S102).

The in-vehicle controller 21 transmits the steering angle of the remote working machine 1 to the remote device 30 by the second communicator 23 (S103).

When the first communicator 33 of the remote device 30 receives the steering angle, the display controller 31b defines (calculates) the expected movement path. The display controller 31b refers to the table T1, and causes the result of calculation of the expected movement path to be displayed on the display screen G (S104).

The controller 31 determines whether the remote manipulator 35 has received an operation (S105). When determining that the remote manipulator 35 has received an operation (YES in S105), the controller 31 transmits a corresponding remote manipulation instruction signal to the remote working machine 1 (S106). The controller 31 refers to the table T1, and performs an operation of switching between displaying and hiding the path object 90 (S107).

The remote working machine 1 sequentially performs the process in steps S101, S103, that is, transmission of the captured images 70a and 70b, and the steering angle to the remote device 30. The display controller 31b sequentially performs the process in steps S102, and S104 to S107 upon data reception by the remote working machine 1 and reception of an operation by the remote manipulator 35. The display controller 31b may perform the process in steps S102, and S104 to S107 at a predetermined cycle.

Next, the transition of the display screen G for the operation received by the remote manipulator 35 will be described using FIG. 4A to FIG. 4C.

When a remote user operates the transmission lever 35d in the first manner, the display controller 31b refers to the table T1, and causes the first captured image 70a of an area forward of the remote working machine 1, the first travel object 91a indicating an expected movement path of the front wheels 7F, and the work object 92 indicating an expected movement path of the working device 2 to be displayed on the display screen G1 as illustrated in FIG. 4A. The display screen G1 illustrated in FIG. 4A is an example of the display screen G when the remote manipulator 35 is operated in the first manner. On the display screen G1, the first travel object 91a and the work object 92 are superimposed and displayed on the first captured image 70a.

When a remote user operates the transmission lever 35d in the second manner, the display controller 31b refers to the table T1, and causes the second captured image 70b of an area rearward of the remote working machine 1, the second travel object 91b indicating an expected movement path of the rear wheels 7R, and the work object 92 indicating an expected movement path of the working device 2 to be displayed on the display screen G1 as illustrated in FIG. 4B. The display screen G2 illustrated in FIG. 4B is an example of the display screen G when the remote manipulator 35 is operated in the second manner. On the display screen G2, the second travel object 91b and the work object 92 are superimposed and displayed on the second captured image 70b.

When a remote user operates the transmission lever 35d in the third manner, the display controller 31b refers to the table T1, and hides the travel object 91 (the first travel object 91a and the second travel object 91b) and the work object 92 indicating an expected movement path of the working device 2 on the display screen G1 as illustrated in FIG. 4C. A display screen G3 illustrated in FIG. 4C is an example of the display screen G when the remote manipulator 35 is operated in the third manner. Specifically, the display screen G3 shows a case where a remote user operates the transmission lever 35d in the third manner with the display screen G1 (the first captured image 70a) displayed on the display 34. On the display screen G3, the first captured image 70a displayed before the transmission lever 35d is operated in the third manner continues to be displayed, and the travel object 91 and the work object 92 are not displayed.

### <Variation>

In the above-described example embodiment, the display controller 31b controls switching between displaying and hiding the captured images 70a and 70b and the path object 90 in accordance with the operation received by the remote manipulator 35. In contrast, a variation differs from the example embodiment in that the display controller 31b switches between displaying and hiding the path object 90 mainly depending on the image capture direction of the captured images 70a and 70b to be displayed on the display 34, and the direction of travel of the traveling device 7 (the remote working machine 1).

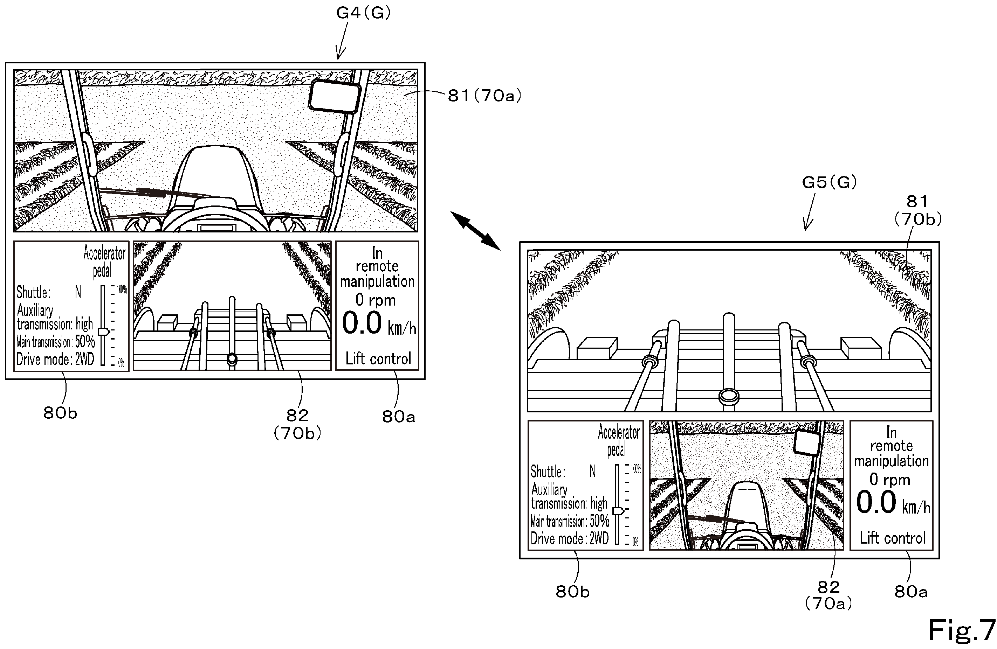

FIG. 7 is a view illustrating an example of the display screen G in the variation. For example, as illustrated on the display screens G4, G5 of FIG. 7, the display controller 31b causes a first state display portion 80a and a second state display portion 80b showing the state of the remote working machine 1, detected by the first detector 25 and the in-vehicle controller 21 of the remote working machine 1 to be displayed on the display 34. The first state display portion 80a displays whether the remote working machine 1 is in travel by remote operation, the traveling speed of the remote working machine 1 (the machine body 3), the number of revolutions of the prime mover 4 and the like. The second state display portion 80b displays the direction of travel (forward travel, rearward travel, neutral) of the traveling device 7, the state (for example, the transmission stage) of the auxiliary transmission of the transmission 5, the state (for example, the transmission stage) of the main transmission, the traveling mode (for example, 2WD) of the remote working machine 1, and the amount of operation of the accelerator pedal.

The display 34 includes a first image display portion 81 and a second image display portion 82. For example, the first image display portion 81 is larger than the second image display portion 82. The first image display portion 81 is a main display screen, and the second image display portion 82 is a sub-display screen. Thus, the first image display portion 81 displays a captured image which is intended to draw more attention of a remote user than the captured image in the second image display portion 82. Between two images selected from the images captured by multiple cameras 26c provided in the remote working machine 1, the display controller 31b displays one captured image on the first image display portion 81, and displays the other captured image on the second image display portion 82.

As illustrated in FIG. 7, on the display screen G4, the first image display portion 81 displays the first captured image 70a showing an area forward of the remote working machine 1, and the second image display portion 82 displays the second captured image 70b showing an area rearward of the remote working machine 1. On the display screen G5, the first image display portion 81 displays the second captured image 70b, and the second image display portion 82 displays the first captured image 70a. Note that the display screens G4 and G5 shown in FIG. 7 are an example, and the type of the information to be displayed, and the placement position of the information are not limited.

As described above, the remote device 30 includes the switching operation actuator 36a. When receiving an operation to perform switching in terms displaying on the display 34, the switching operation actuator 36a outputs a switching instruction to switch the displaying of, for example, the first image display portion 81 and the second image display portion 82 on the display 34. When the switching operation actuator 36a is operated, the display 34 switches from one to the other of the first captured image 70a and the second captured image 70b according to the operation of the switching operation actuator 36a regardless of (without relying on) the operation in the first manner and the operation in the second manner of the remote manipulator 35. When a remote user operates the switching operation actuator 36a, the display controller 31b inputs, to the display 34, an instruction signal to switch from one to the other of the first captured image 70a and the second captured image 70b displayed on the first image display portion 81 and the second image display portion 82.

For example, when the display screen G4 is displayed on the display 34, upon receiving a display switching instruction via the switching operation actuator 36a, the display controller 31b makes a transition to the display screen G5. Specifically, the display controller 31b causes the second captured image 70b instead of the first captured image 70a to be displayed on the first image display portion 81, and causes the first captured image 70a instead of the second captured image 70b to be displayed on the second image display portion 82.

When the display screen G5 is displayed on the display 34, upon receiving a display switching instruction via the switching operation actuator 36a, the display controller 31b makes a transition to the display screen G4. Specifically, the display controller 31b causes the first captured image 70a instead of the second captured image 70b to be displayed on the first image display portion 81, and causes the second captured image 70b instead of the first captured image 70a to be displayed on the second image display portion 82.

When the direction of travel of the traveling device 7 caused by the operation in the first manner or the second manner matches the direction of the area of the captured image 70a, 70b, the display 34 displays the travel object 91 and the work object 92, whereas, when the direction of travel of the traveling device 7 caused by the operation in the first manner or the second manner does not match the direction of the area of the captured image 70a, 70b, the display 34 hides the travel object 91 and the work object 92. Specifically, when the remote manipulator 35 is operated in the first manner, the display 34 displays the first travel object 91a and the work object 92 in the first captured image 70a and hides the second travel object 91b, and when the remote manipulator 35 is operated in the second manner, the display 34 displays the second travel object 91b and the work object 92 in the second captured image 70b and hides the first travel object 91a.

FIG. 5B is a view illustrating an example of a table T2 in Variation 1. In the table T2, displaying and hiding the path object 90 for the operation of the remote manipulator 35 are defined corresponding to the first captured image 70a and the second captured image 70b. As described above, the first captured image 70a is an image of an area forward of the remote working machine 1. The table T2 holds the definition that, for the operation in the first manner to cause the remote working machine 1 to travel forward, causes the first travel object 91a and the work object 92 to be superimposed and displayed on the first captured image 70a. The second captured image 70b is an image of an area rearward of the remote working machine 1. The table T2 holds the definition that, for the operation in the second manner to cause the remote working machine 1 to travel rearward, causes the second travel object 91b and the work object 92 to be superimposed and displayed on the second captured image 70b.

When the remote manipulator 35 (the transmission lever 35d) receives one of the operation in the first manner, the operation in the second manner, or the operation in the third manner, the controller 31 transmits a corresponding remote manipulation instruction signal to the remote working machine 1, and the controller 31 (the display controller 31b) refers to the table T2, and performs control to cause the path object 90 to be displayed on one of the captured images 70a and 70b, which matches the direction of travel of the traveling device 7.

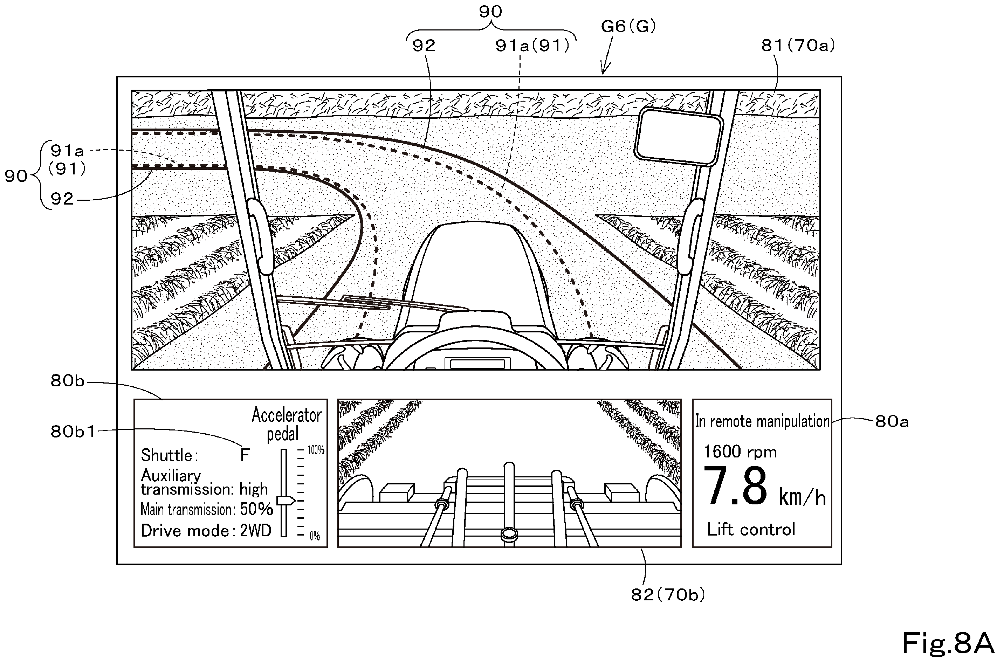

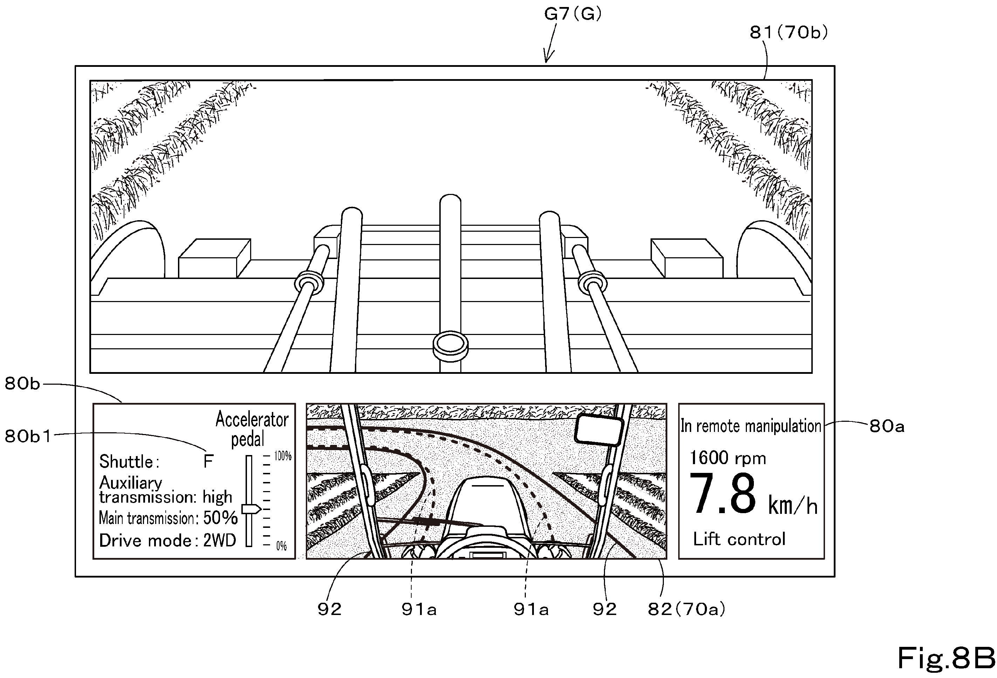

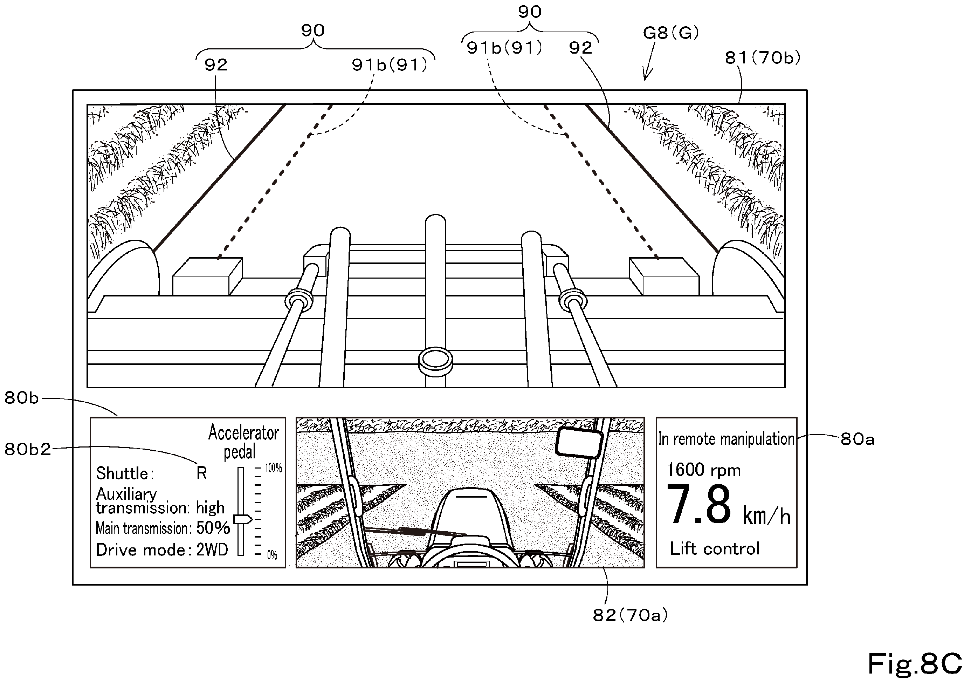

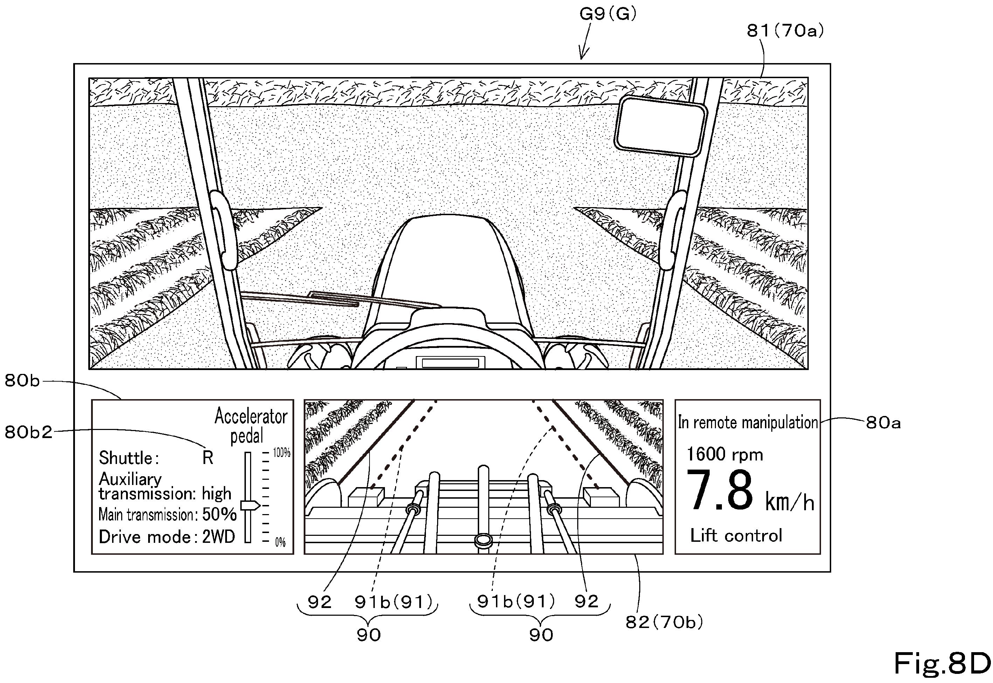

FIG. 8A and FIG. 8B are views each illustrating an example of the display screen G when the remote manipulator 35 is operated in the first manner in the variation. FIG. 8C and FIG. 8D are views each illustrating an example of the display screen G when the remote manipulator 35 is operated in the second manner in the variation. Next, the transition of the display screen G will be described using FIG. 8A to FIG. 8D.

As illustrated in FIG. 8A and FIG. 8B, when a remote user operates the transmission lever 35d in the first manner, the display controller 31b refers to the table T2, and causes the first travel object 91a and the work object 92 to be displayed in the first captured image 70a, and hides the second travel object 91b. For example, on the display screen G6 (FIG. 8A), the second state display portion 80b shows an indication 80b1 ("shuttle: F", that is, the shuttle lever is in the forward position) indicating that the direction of travel of the traveling device 7 is switched to the forward direction. On the display screen G6, the first travel object 91a and the work object 92 are superimposed and displayed on the first captured image 70a which is displayed on the first image display portion 81.

As illustrated in FIG. 8A and FIG. 8B, when a remote user operates the switching operation actuator 36a with the display screen G6 displayed on the display 34, the display controller 31b performs control to switch between the first captured image 70a displayed on the first image display portion 81 and the second captured image 70b displayed on the second image display portion 82. When switching the displaying of the captured images 70a and 70b, the display controller 31b refers to the table T2, and causes the first travel object 91a and the work object 92 to be displayed on the second image display portion 82 in which the first captured image 70a is displayed, and hides the second travel object 91b. On the display screen G7, the first travel object 91a and the work object 92 are superimposed and displayed on the first captured image 70a displayed in the second image display portion 82.

As illustrated in FIG. 8B and FIG. 8C, when a remote user operates the transmission lever 35d in the second manner with the display screen G7 displayed on the display 34, the display controller 31b refers to the table T2, and causes the second travel object 91b and the work object 92 to be displayed on the second captured image 70b, and hides the first travel object 91a. For example, on the display screen G8 (FIG. 8C), the second state display portion 80b shows an indication 80b2 ("shuttle: R", that is, the shuttle lever is in the rearward position) indicating that the direction of travel of the traveling device 7 is switched to the rearward direction. On the display screen G8, the second travel object 91b and the work object 92 are superimposed and displayed on the second captured image 70b displayed in the first image display portion 81.

As illustrated in FIG. 8C and FIG. 8D, when a remote user operates the switching operation actuator 36a with the display screen G8 displayed on the display 34, the display controller 31b performs control to switch the second captured image 70b displayed in the first image display portion 81 and the first captured image 70a displayed in the second image display portion 82. When switching the displaying of the captured images 70a and 70b, the display controller 31b refers to the table T2, and causes the second travel object 91b and the work object 92 to be displayed in the second image display portion 82 on which the second captured image 70b is displayed, and hides the first travel object 91a. On the display screen G9, the second travel object 91b and the work object 92 are superimposed and displayed on the second captured image 70b which is displayed in the second image display portion 82.

Note that the display form of the first travel object 91a, the second travel object 91b, and the work object 92 is not limited to the above description, and the line type such as a straight line, a dashed line, line width, and color may vary. The path object 90 may be an animation performed along the direction of travel of the remote working machine 1. The display controller 31b may cause the display form of the path object 90 to differ depending on the captured images 70a and 70b on which objects are superimposed.

Main characteristic items and effects of remote devices 30 and remote manipulation systems 100 in example embodiments described above are as follows.

(Item A1) A remote device 30 including a first communicator 33 to communicate with a remote working machine 1, a remote manipulator 35 to receive an operation, and remotely manipulate the remote working machine 1 via the first communicator 33, and a display 34 to display a captured image 70a, 70b of a surrounding area of the remote working machine 1 and a path object 90 indicating an expected travel path of the remote working machine 1 such that the path object 90 is superimposed on the captured image 70a, 70b, wherein the display 34 is configured to switch between displaying and hiding the path object 90 in accordance with the operation received by the remote manipulator 35.

With the remote device 30 according to item A1, the path object 90 indicating an expected travel path of the remote working machine 1 is displayed, thus a remote user can recognize the expected travel path, and perform remote manipulation based on the expected travel path. Thus, the remote device 30 can support, by displaying the expected travel path, remote manipulation by a remote user. Also, displaying and hiding the path object 90 is switched according to the operation, thus the expected travel path can be appropriately displayed according to the remote manipulation.

(Item A2) The remote device 30 according to item A1, wherein the path object 90 includes a travel object 91 indicating an expected movement path of a traveling device 7 of the remote working machine 1 and a work object 92 indicating an expected movement path of a working device 2 of the remote working machine 1, and the display 34 is configured to switch between displaying and hiding the travel object 91 and the work object 92 in accordance with the operation received by the remote manipulator 35.

With the remote device 30 according to item A2, a remote user can remotely manipulate the remote working machine 1 while recognizing the expected movement paths of the traveling device 7 and the working device 2, thus the operability of remote manipulation can be improved. Therefore, the remote device 30 can support remote manipulation performed by a remote user more specifically by displaying the expected movement paths of the traveling device 7 and the working device 2.

(Item A3) The remote device 30 according to item A2, wherein the travel object 91 includes a first travel object 91a indicating an expected movement path of at least one front wheel 7F of the traveling device 7 and a second travel object 91b indicating an expected movement path of at least one rear wheel 7R of the traveling device 7, the remote manipulator 35 is configured to be operated in a first manner to switch a direction of travel of the traveling device 7 to a forward direction and to be operated in a second manner to switch the direction of travel of the traveling device 7 to a rearward direction, and the display 34 is configured to display the first travel object 91a and a first captured image 70a of an area forward of the remote working machine 1 when the remote manipulator 35 is operated in the first manner, and display the second travel object 91b and a second captured image 70b of an area rearward of the remote working machine 1 when the remote manipulator 35 is operated in the second manner.

With the remote device 30 according to item A3, in a case of forward travel of the traveling device 7, expected movement path(s) of the front wheel(s) 7F is displayed, thus a remote user can recognize the expected movement path(s) of the front wheel(s) 7F without performing a display operation, and in a case of rearward travel of the traveling device 7, expected movement path(s) of the rear wheel(s) 7R is displayed, thus a remote user can recognize the expected movement path(s) of the rear wheel(s) 7R without performing a display operation.

(Item A4) The remote device 30 according to item A3, further including a switching operation actuator 36a to receive an operation to perform switching in terms of displaying on the display 34, wherein the display 34 is configured to, when the switching operation actuator 36a is operated, switch between the first captured image 70a and the second captured image 70b in accordance with the operation of the switching operation actuator 36a without relying on the operation of the remote manipulator 35 in the first manner or the second manner.

With the remote device 30 according to item A4, the first captured image 70a and the second captured image 70b to be displayed on the display 34 can be switched appropriately, thus a remote user can appropriately recognize the surrounding area of the working machine.

(Item A5) The remote device 30 according to item A4, wherein the display 34 is configured to display the first or second travel object 91 and the work object 92 when the direction of travel of the traveling device 7 caused by the operation in the first manner or the second manner matches the direction of the area of the first or second captured image, and hide the first or second travel object 91 and the work object 92 when the direction of travel of the traveling device 7 caused by the operation in the first manner or the second manner does not match the direction of the area of the first or second captured image.

With the remote device 30 according to item A5, the path object 90 is displayed on a captured image of an area in the direction of travel of the remote working machine 1, and the path object 90 is not displayed on a captured image of an area not in the direction of travel of the remote working machine 1. Thus, a remote user can recognize that a captured image with the path object 90 displayed shows an area in the direction of travel of the remote working machine 1. In other words, the path object 90 of the display 34 allows a remote user to reduce the risk of misidentification of the direction of travel of the remote working machine 1.

(Item A6) The remote device 30 according to item A 5, wherein the display 34 is configured to display the first travel object 91a and the work object 92 and hide the second travel object 91b when the remote manipulator 35 is operated in the first manner and the first captured image 70a is displayed, and display the second travel object 91b and the work object 92 and hide the first travel object 91a when the remote manipulator 35 is operated in the second manner and the second captured image 70b is displayed.

With the remote device 30 according to item A6, in a case of forward travel of the traveling device 7, expected movement paths of the front wheel(s) 7F and the working device 2 are displayed, thus a remote user can recognize the expected movement paths of the front wheel(s) 7F and the working device 2 without performing a display operation, and in a case of rearward travel of the traveling device 7, expected movement paths of the rear wheel(s) 7R and the working device 2 are displayed, thus a remote user can recognize the expected movement paths of the rear wheel(s) 7R and the working device 2 without performing a display operation.

(Item A7) The remote device 30 according to any one of items A3 to A6, wherein the remote manipulator 35 is further configured to be operated in a third manner to switch the traveling device 7 to neutral in addition to the first manner and the second manner, and the display 34 is configured to, when the remote manipulator 35 is operated in the third manner, hide the travel object 91 and the work object 92.

With the remote device 30 according to item A7, when the traveling device 7 is in neutrals and the remote working machine 1 is stopped, the travel object 91 and the work object 92 are hidden in the captured images 70a and 70b, thus the information included in the first captured image 70a and the second captured image 70b is easily recognized.

(Item A8) A remote manipulation system 100 including the remote device 30 according to any one of items A1 to A7, and the remote working machine 1 to be remotely manipulated by the remote device 30, wherein the remote working machine 1 includes a second communicator 23 to mutually communicate with the first communicator 33.

With the remote manipulation system 100 according to item A8, it is possible to achieve a remote manipulation system that provides the above-mentioned advantageous effects.

While example embodiments of the present invention have been described above, it is to be understood that the example embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: remote working machine
- 2: working device
- 7: traveling device
- 7F: front wheel
- 7R: rear wheel
- 23: second communicator
- 30: remote device
- 33: first communicator
- 34: display
- 35: remote manipulator
- 36a: switching operation actuator
- 70a: first captured image
- 70b: second captured image
- 90: path object
- 91: travel object
- 91a: first travel object
- 91b: second travel object
- 92: work object
- 100: remote manipulation system

## Claims

1. A remote device comprising:
a first communicator to communicate with a remote working machine;
a remote manipulator to receive an operation, and remotely manipulate the remote working machine via the first communicator; and
a display to display a captured image of a surrounding area of the remote working machine and a path object indicating an expected travel path of the remote working machine such that the path object is superimposed on the captured image; wherein
the display is configured to switch between displaying and hiding the path object in accordance with the operation received by the remote manipulator.

2. The remote device according to claim 1, wherein
the path object includes a travel object indicating an expected movement path of a traveling device of the remote working machine and a work object indicating an expected movement path of a working device of the remote working machine; and
the display is configured to switch between displaying and hiding the travel object and the work object in accordance with the operation received by the remote manipulator.

3. The remote device according to claim 2, wherein
the travel object includes a first travel object indicating an expected movement path of at least one front wheel of the traveling device and a second travel object indicating an expected movement path of at least one rear wheel of the traveling device;
the remote manipulator is configured to be operated in a first manner to switch a direction of travel of the traveling device to a forward direction and to be operated in a second manner to switch the direction of travel of the traveling device to a rearward direction; and
the display is configured to display the first travel object and a first captured image of an area forward of the remote working machine when the remote manipulator is operated in the first manner, and display the second travel object and a second captured image of an area rearward of the remote working machine when the remote manipulator is operated in the second manner.

4. The remote device according to claim 3, further comprising a switching operation actuator to receive an operation to perform switching in terms of displaying on the display; wherein
the display is configured to, when the switching operation actuator is operated, switch between the first captured image and the second captured image in accordance with the operation of the switching operation actuator without relying on the operation of the remote manipulator in the first manner or the second manner.

5. The remote device according to claim 4, wherein the display is configured to display the first or second travel object and the work object when the direction of travel of the traveling device caused by the operation in the first manner or the second manner matches the direction of the area of the first or second captured image, and hide the first or second travel object and the work object when the direction of travel of the traveling device caused by the operation in the first manner or the second manner does not match the direction of the area of the first or second captured image.

6. The remote device according to claim 5, wherein the display is configured to:
display the first travel object and the work object and hide the second travel object when the remote manipulator is operated in the first manner and the first captured image is displayed; and
display the second travel object and the work object and hide the first travel object when the remote manipulator is operated in the second manner and the second captured image is displayed.

7. The remote device according to claim 3, wherein
the remote manipulator is further configured to be operated in a third manner to switch the traveling device to neutral in addition to the first manner and the second manner; and
the display is configured to, when the remote manipulator is operated in the third manner, hide the travel object and the work object.

8. A remote manipulation system comprising:
the remote device according to any one of claims 1 to 7; and
the remote working machine to be remotely manipulated by the remote device; wherein
the remote working machine includes a second communicator to mutually communicate with the first communicator.
